(19) Europäisches Patentamt

European Patent Office

Office européen des brevets

(11) **EP 1 036 109 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **98963385.4**

(22) Anmeldetag: **27.11.1998**

(51) Int Cl.[7]: **C08H 5/04**, C08B 5/00, C02F 1/28, B01J 20/24

(86) Internationale Anmeldenummer:
**PCT/DE98/03504**

(87) Internationale Veröffentlichungsnummer:
**WO 99/28372 (10.06.1999 Gazette 1999/23)**

(54) **BIOSORBENTIEN UND VERFAHREN ZU DEREN HERSTELLUNG**

BIOSORBENTS AND PROCESS FOR PRODUCING THE SAME

AGENTS DE BIOSORPTION ET LEUR PROCEDE DE PRODUCTION

(84) Benannte Vertragsstaaten:
**AT BE CH DE DK ES FI FR GB GR IE IT LI NL PT SE**

(30) Priorität: **01.12.1997 DE 19753196**
**30.10.1998 DE 19850286**

(43) Veröffentlichungstag der Anmeldung:
**20.09.2000 Patentblatt 2000/38**

(73) Patentinhaber: **Eisu Innovative Gesellschaft für Technik und Umweltschutz mbH**
**06766 Wolfen (DE)**

(72) Erfinder:
• **PIESCHEL, Friedemann**
  **D-06766 Wolfen (DE)**
• **LANGE, Eckehard**
  **D-06846 Dessau (DE)**
• **CAMACHO, Juan**
  **D-06766 Wolfen (DE)**
• **FIESELER, Christine**
  **D-06780 Zörbig (DE)**
• **IKIER, Hendrik**
  **D-06766 Wolfen (DE)**

(74) Vertreter: **Tragsdorf, Bodo, Dipl.-Ing.**
**Patentanwalt**
**Heinrich-Heine-Strasse 3**
**06844 Dessau (DE)**

(56) Entgegenhaltungen:
**DE-A- 4 239 749          US-A- 2 964 416**

## Beschreibung

Die Erfindung betrifft ein Verfahren zur Herstellung von Biosorbentien durch Phosphorylierung cellulosehaltiger Materialien mit Phosphorsäure oder Ammoniumphosphat In Gegenwart von Harnstoff. Ferner bezieht sich die Erfindung auf Biosorbentien mit besonders guten anwendungstechnischen Eigenschaften. Biosorbentien dieser Art werden insbesondere zur Entfernung von Schwermetallen aus wäßrigen Lösungen eingesetzt.

Aus der DE 42 39 749 C2 ist ein Verfahren zur Herstellung von phosphoryliertem Holz bekannt. Holzmehl mit einer Körnung von 0,05 bis 3 mm wird mit Phosphorsäure, Wasser und Harnstoff zu einem Brei verrührt und ca. 1 Stunde bei etwa 80 °C angetrocknet. Das so erhaltene Reaktionsgemisch wird auf ca. 170 °C etwa 70 min lang erhitzt, anschließend mit heißem Wasser gewaschen, bis die Waschflüssigkelt farblos erscheint und getrocknet. In einer alternativen Ausführungsform des Verfahrens wird auch die Verwendung von Ammoniumphosphat an Stelle von Phosphorsäure beschrieben. Das anfallende Reaktions- bzw. Rohprodukt muß anschließend von Phosphatresten und farbigen Verunreinigungen befreit werden. Die Reinigungsstufen sind sehr zeitaufwendig und wirken sich nachteilig auf die Kosten des Endproduktes aus. Gemäß dem in der DE 42 39 749 beschriebenen Reinigungsprozeß ist das Rohprodukt so lange mit heißem Wasser zu waschen, bis die Waschflüssigkeit farblos erscheint. Das dann vorliegende Produkt wird mit Natronlauge gewaschen und abschließend erneut bis zur Farblosigkeit des Filtrats gewaschen und getrocknet. Ein weiterer Nachteil dieses Verfahrens ist der sehr hohe Aufwand an Phosphorsäure bzw. Phosphat sowie Harnstoff. Die Umsetzung bei 170 °C Innerhalb der genannten Zeitdauer ist sehr energieaufwendig, führt zur Bildung von intensiv gefärbten dunklen Verunreinigungen und Zersetzungsprodukten von Holzbestandteilen, die nachträglich wieder mit ausgewaschen werden müssen. Außerdem erfordert der zur Erzielung einer befriedigenden Sorptionskapazität angestrebte hohe Phosphorgehalt im Sorbens den Einsatz eines hohen Überschusses an Phosphorsäure bzw. Phosphat sowie Harnstoff. Deshalb ist bei der Reinigung des Rohprodukts mit einer starken Belastung der Waschwässer zu rechnen, wodurch hohe Entsorgungskosten entstehen.

In der DE-OS 23 57 696 ist ein Verfahren beschrieben, bei dem u.a. cellulosehaltiges Material mit Phosphorsäure im Gewichtsverhältnis Phosphorsäure zu organischem Material von 0,25 : 1 bis 2,0 :1 gemischt wird, das Gemisch bei Temperaturen von 160 bis 600 °C gebrannt und anschließend mit Wasser gewaschen und zu einem Pulver getrocknet wird.

Der Nachteil dieses Verfahrens besteht vor allem in einer geringen Ausbeute an Adsorptionsmittel. Außerdem werden mit diesem Adsorptionsmittel nur unzureichende Sorptionsergebnisse erzielt. Bekanntlich wird Cellulose durch starke Säuren relativ schnell abgebaut. Der alleinige Zusatz der Phosphorsäure führt zu unerwünschten Nebenreaktionen, die die Ursache für die vorgenannten Nachteile bilden.

Aus der WO 95/02452 ist ein Verfahren zur Herstellung von Sorbentien aus polysaccharidhaltigen Rohstoffen bekannt, bei dem diesen Modifizierungsmittel oder Gemische dieser Mittel zugesetzt werden und eine thermische Behandlung bei Temperaturen bis zu 600 °C vorgenommen wird. Gemäß den Ausführungsbeispielen kann ein Gemisch aus Orthophosphorsäure, Dimethylformamid und Harnstoff als Modifizierungsmittel dienen. Das Gemisch wird mit dem cellulosehaltigen Material bei 150 °C zwei Stunden lang gekocht. Anschließend wird filtriert, der feste Rest mit destilliertem Wasser bis zum Neutralwert der flüssigen Phase gewaschen, der Rückstand getrocknet und zerkleinert.

Die Durchführung der Phosphorylierung in Dimethylformamid erweist sich jedoch wegen des Aufwandes bei der Abtrennung und Rückführung dieses bekanntlich nicht unproblematischen Lösungsmittels als nachteilig. Außerdem erfordert dieses Verfahren relativ große Einsatzmengen an Harnstoff. Die so hergestellten Sorbentien auf der Basis cellulosehaltiger Rohstoffe, wie Zuckerrübenschnitzel und Pilzmyzelien, weisen ungünstige mechanische Eigenschaften auf, die eine Anwendung in den bekanntlich sehr effektiven Adsorbersäulen ausschließen. Zudem zeigen die Produkte Sorptionsleistungen, die sowohl hinsichtlich Kapazität als auch Festigkeit nicht die von phosphorylierten Cellulosen übertreffen.

Auch aus der RU-2096082 C1 ist es bekannt, daß das phosphoryllerte Rohprodukt einer aufwendigen Reinigung unterzogen werden muß.

Trotz der aufwendigen Reinigungsoperationen der bekannten Verfahren sind die erhaltenen Biosorbentien nicht frei von löslichen phosphorhaltigen Verunreinigungen. Dabei handelt es sich um organische polymere Phosphate, die durch Auswaschprozesse nicht vollständig entfernt werden können. Diese Nebenprodukte können im Endprodukt nur schwer nachgewiesen werden. Sie lassen sich z.B. durch starkes Ansäuern ihrer Lösung ausflocken und ergeben die bekannte Phosphatreaktion mit Ammoniummolybdat und Salpetersäure erst nach längerer Zeit in der Siedehitze. Aufgrund ihrer Struktur sind diese Nebenprodukte gute Komplexbildner und beeinträchtigen dabei die Sorption von Schwermetallen am Biosorbens. Ein weiterer Nachteil der bekannten gattungsgemäßen Biosorbentien besteht in deren geringer mechanischer Belastbarkeit. Bei hohen Strömungsgeschwindigkeiten kann es zu Verdichtungen der Sorbenspackung kommen, die bis zur vollständigen Blockade des Austausch- bzw. Reinigungsprozesses führen können.

Bedingt durch die geringe mechanische Belastbarkeit der Biosorbentien werden diese nach der Reinigung schwammartig und die Oberfläche der Partikel ist mit feinen Fasern bedeckt, die beim bestimmungsgemäßen Einsatz der Biosorbentien in Austauschersäulen bereits bei geringer mechanischer Belastung abgerieben und ausgeschwemmt werden.

Dadurch werden die zu reinigenden Lösungen getrübt und über die mitausgeschwemmten Faserbestandteile werden auch zu adsorbierende Bestandteile ausgetragen. Dies ist ein erheblicher qualitativer Mangel der bekannten Blosorbentien.

Der Erfindung lag die Aufgabe zugrunde, die bekannten Verfahren zur Herstellung von Biosorbentien auf der Basis cellulosehaltiger Materialien durch Phosphorylierung mit Phosphorsäure oder Ammoniumphosphat in Gegenwart von Harnstoff so zu verbessern, daß der Reinigungsaufwand für die erhaltenen Rohprodukte erheblich gesenkt werden kann, die Bildung von unerwünschten löslichen organischen polymeren Phosphaten als Nebenprodukte verhindert wird und Biosorbentien mit einer erhöhten mechanischen Festigkeit erhalten werden.

Ferner sollen Biosorbentien erhalten werden, die sich durch sehr gute anwendungstechnische Eigenschaften auszeichnen, insbesondere für den Einsatz In Adsorbersäulen geeignet sind und einen geringen Herstellungsaufwand erfordern.

Erfindungsgemäß wird die Aufgabe durch die im Anspruch 1 angegebenen Merkmale gelöst Geeignete Ausgestaltungsvarianten der Verfahrensweisen sind Gegenstand der Ansprüche 2 bis 11.

Im Anspruch 12 sind Biosorbentien mit besonders guten anwendungstechnischen Eigenschaften definiert.

Nach der im Anspruch 1 vorgeschlagenen Verfahrensweise werden Biosorbentlen erhalten, die sich insbesondere durch gute Sorptionsleistungen und außerdem noch durch hervorragende anwendungstechnlsche Eigenschaften auszeichnen.

Das cellulosehaltige Ausgangsmaterial wird vor der Phosphorylierungs- und Carbamidierungsreaktion in eine besonders reaktionsfähige Form gebracht. Diese sogenannte Aktivierung erfolgt durch Einstellen eines Feuchtigkeitsgehaltes des cellulosehaltigen Materials auf einen Wert von 30 bis 60 %, insbesondere durch Zugabe von Wasser. Das cellulosehaltige Ausgangsmaterial hat üblicherweise bereits einen Wassergehalt von 5 bis 25 %. Um die gewünschte Aktivierung zu erreichen, ist es erforderlich, daß das cellulosehaltige Material über einen Zeitraum von mindestens einer Stunde der Einwirkung von Wasser ausgesetzt wird. Die Zeltdauer ist im wesentlichen abhängig vom bereits vorliegenden Feuchtigkeitsgehalt des Materials.

Die Reaktionspartner Phosphorylierungsmittel und Harnstoff müssen in das cellulosehaltige Material so eingemischt werden, daß diese nach Beendigung des Mischprozesses gleichmäßig verteilt vorliegen. Neben der erwähnten Aktivierung ist besonders auf eine gleichmäßige Verteilung der Reaktionspartner in dem cellulosehaltigen Material zu achten.

Eine unbedingte Notwendigkeit der Einhaltung einer bestimmten Reihenfolge bei der Zugabe der Reaktionspartner besteht nicht, wobei jedoch eine getrennte Zugabe, erst Phosphorylierungsmittel und dann Harnstoff, bevorzugt werden sollte, da der Mischprozeß jeweils bei Raumtemperatur erfolgen kann und bei Einhaltung dieser Reihenfolge Sorbentien mit besonders guten anwendungstechnischen Eigenschaften erhalten wurden.

Die Aktivierung kann Insbesondere bei Verwendung trockener cellulosehaltiger Materialien mit einem Wassergehalt von ca. 10 % oder darunter vorteilhaft mit dem Vermischen mit Harnstoff und/oder Phosphorylierungsmittel kombiniert werden. Aus den zuzusetzenden Mengen an Harnstoff und/oder Phosphorylierungsmittel und der für die Aktivierung vorbestimmten Wassermenge wird gegebenenfalls unter Erwärmen bis auf eine Temperatur von 60 °C eine klare Lösung dieser Komponenten gebildet, die an Stelle von Wasser zur Aktivierung des cellulosehaltigen Materials eingesetzt wird. Das cellulosehaltige Material sollte dabei vorher auf die Temperatur der Lösung erwärmt werden. Während der Aktivierungszeit muß jedoch darauf geachtet werden, daß kein Wasserverlust eintritt.

Ein wesentlicher Verfahrensschritt besteht darin, daß vor der eigentlichen Phosphorylierung und Carbamidlerung die im Reaktionsgemisch noch vorhandene Feuchtigkeit nahezu vollständig ausgetrieben wird. Dies erfolgt durch Erhitzen des Gemisches auf Temperaturen von 60 bis 100 °C und gleichzeitigem Anlegen von Vakuum. Erst wenn das Wasser abdestilliert ist, darf die nachfolgende Phosphorylierungs- und Carbamidierungsreaktion eingeleitet werden, die ebenfalls unter Vakuum durchgeführt wird.

Die Durchführung dieser Reaktion unter Vakuum führt zu einer Reihe von entscheidenden Vorteilen. Von großer Bedeutung ist die Absenkung der nach bisher bekannten Verfahren notwendigen Reaktionstemperatur um etwa 40 °C. Die Reaktionstemperaturen können somit auf 125 bis 145 °C reduziert werden. Demzufolge werden Nebenreaktionen von Phosphorylierungsmittel und Harnstoff deutlich vermindert sowie Zersetzungsreaktionen der cellulosehaltigen Materialien unterdrückt. Dadurch ist es möglich, die Einsatzmengen der Reaktionskomponenten Harnstoff und Phosphorylierungsmittel zu verringern. Außerdem werden eine Verbesserung der Produktfarbe, der Stabilität der Sorbenspartikel und eine erhebliche Verringerung des Reinigungsaufwandes für die Sorbenspartikel erreicht.

Infolge der niedrigen Reaktionstemperaturen und der geringen Einsatzmengen an Phosphorylierungsmittel und Harnstoff wird eine schonende Behandlung des cellulosehaltigen Materials während der Durchführung der Phosphorylierung und Carbamidierung gewährleistet. Dadurch bleiben die Strukturen und mechanischen Eigenschaften der cellulosehaltigen Materialien bei der Umsetzung zum Sorbens weitgehend erhalten. Ausgehend von dem jeweiligen cellulosehaltigen Ausgangsmaterial kann somit deren späterer Verwendungszweck bestimmt werden. So werden z. B. Sorbenspartikel auf der Basis von Holz, die besonders hart und kompakt sind, bevorzugt für die Sorption in Säulen eingesetzt. Für eine batchweise Sorption sind hingegen flockige und weichere Sorbenspartikel, wie z.B. auf der Basis von Rübenschnitzel oder Gerstenstroh, besser geeignet.

Für die Herstellung der Sorbentien Ist es wichtig, Reaktionszeiten von mindestens einer Stunde einzuhalten. Bei geringeren Reaktionszeiten wird das eingesetzte Phosphorylierungsmittel unvollständig umgesetzt, und insbesondere Ist der Stickstoffgehalt zu niedrig. Weiterhin hat sich herausgestellt, daß nach zu langen Reaktionszeiten, d.h. oberhalb vier Stunden, die Sorptionskapazität deutlich nachläßt, wobei offensichtlich die bekannten Kondensationsreaktionen der Phosphatgruppen untereinander zu Diphosphaten usw. ablaufen.

Ein Vergleichsversuch zur Herstellung der erfindungsgemäßen Sorbentien ohne cellulosehaltiges Material hat keine schwer in Wasser löslichen Stoffe ergeben, so daß kein Anlaß zu der Vermutung besteht, daß durch Nebenreaktionen wasserunlösliche Harnstoffkondensate mit sorptiven Eigenschaften dem Sorbens anhaften und die Ergebnisse verfälschen.

Nach Beendigung der Reaktionszelt wird das Reaktionsprodukt in an sich bekannter Weise auf Normaltemperatur abgekühlt, und die Verunreinigungen werden ausgewaschen. Als Phosphorsäure kann jede beliebige technische Qualität, insbesondere die handelsübliche 85 %ige, eingesetzt werden. Harnstoff eignet sich vorzugsweise in prillierter Form, jedoch ist auch jede andere technische Handelsware geeignet.

Versuche zeigten, daß der Einsatz von größeren Mengen Phosphorsäure und damit das Anstreben eines höheren Phosphorgehaltes als angegeben bei Zugabe einer im vorgeschlagenen Verhältnis gesteigerten Menge Harnstoff zu schiechteren Sorbentien mit zu geringem Stickstoffgehalt und weiterhin zu mangelhafter Stabilität der Sorbentien infolge übermäßigen Quellens führt. Bei geringerem Einsatz an Phosphorsäure nimmt die Kapazität der Sorbentien entsprechend ab. Eine überproportionale Steigerung des Harnstoffeinsatzes führt zu keinen veränderten Produkten, aber zu einer zusätzlichen Belastung der Waschwässer durch unumgesetzten Harnstoff. Eine Verringerung des Harnstoffeinsatzes unterhalb des angegebenen Molverhältnisses führt zu einer Minderung der Sorptionsleistungen trotz ausreichender Phosphorylierungsgrade, bzw. bei drastischer Senkung zusätzlich zu unzureichender Ausnutzung des eingesetzten Phosphorylierungsmittels, d.h. zu geringeren Phosphorylierungsgraden.

Entsprechend der vorgeschlagenen Verfahrensweise führen deutlich geringere Einsatzmengen an Harnstoff und Phosphorylierungsmittel zu Sorbentien mit hoher Sorptionsleistung. Dies war nach den Erkenntnissen aus dem bekannten Stand der Technik nicht zu erwarten. Im Vergleich zu den ansonsten üblichen Einsatzmengen an Harnstoff und Phosphorylierungsmittel können diese um ca. die Hälfte reduziert werden, wobei Biosorbentien mit hervorragenden Eigenschaften erhalten werden. Die geringen Einsatzmengen führen neben einer Reduzierung der Kosten noch zu einem geringeren Aufwand für die Beseitigung der Abprodukte aus den Waschwässern bei der Reinigung der Sorbenspartikel.

Als cellulosehaltige Materialien kommen alle Naturstoffe mit Cellulose als Stützsubstanz in Frage, wie die verschiedensten Hölzer, aber auch ausgelaugte Zuckerrübenschnitzel, Stroh und Sonnenblumenkernspelzen. Für die Umsetzung zu den erfindungsgemäßen Sorbentien ist es wichtig, die beim fertigen Sorbens erwünschte Körnung durch entsprechendes Zerkleinern des cellulosehaltigen Materials bereits vor der anschließenden Aktivierung zu erzeugen. Die Zerkleinerung auf eine Teilchengröße von 0,2 bis 4,0 mm erfolgt z.B. mittels Schneidmühlen. Die unterschiedlichen cellulosehaltigen Materialien mit ihrer vielgestaltigen Faserstruktur, Dichte und Festigkeit erweitern die Einsatzgebiete der daraus gewinnbaren Sorbentien.

Die für die Durchführung des erfindungsgemäßen Verfahrens geeigneten cellulosehaltigen Materialien weisen üblicherweise einen Wassergehalt von ca. 5 bis 25 % auf. Die Feuchtigkeit dieser Materialien wird für die Aktivierung auf einen Gehalt von 30 bis 60 % gebracht, z.B. durch Zugabe von Wasser. Als Ausgangsmaterialien können auch Gemische aus verschiedenen cellulosehaltigen Materialien eingesetzt werden. Nach der vorgeschlagenen Verfahrensweise können auch Biosorbentien hergestellt werden, die einen Gehalt an Phosphor in Höhe von 5 bis 10 % und an Stickstoff in Höhe von 1 bis 4 % aufweisen, und bei denen der Stickstoff In Form von Carbamidgruppen vorliegt.

Diese zeichnen sich im Vergleich zu bekannten Biosorbentien, die ausgehend von anderen Einsatzmengen an Phosporylierungsmittel und Harnstoff erhalten werden, und bei denen der Stickstoff nicht in Form von Carbamidgruppen vorliegt, durch sehr gute Sorptionseigenschaften aus. Infolge der in den Biosorbentien vorliegenden funktionellen Phosphatgruppen und Carbamidgruppen weisen diese sehr hohe Sorptionsleistungen auf, wobei Sorptionskapazitäten von bis zum 6 meq/g für verschiedene Schwermetalle erreicht werden konnten sowie eine hohe Festigkeit der Bindung der Schwermetalle, wie die in den Beispielen nachgewiesenen Gleichgewichtsdaten belegen. Als Ursache wird ein Synergismus durch die gebildeten Phosphatester- und Carbamidgruppen vermutet. Innerhalb der angegebenen Bereiche der Stickstoff- und Phosphorgehalte wurde ein Optimum der Biosorbentien hinsichtlich der Sorptionsleistungen ermittelt.

Beispiele

A        Herstellung der Biosorbentien als Rohprodukt

Beispiel 1

100 g Fichtenholzmehl mit einer Körnung von 0,4 bis 1,25 mm und einem Wassergehalt von 11 % wird mit einer Menge von 1 g elementarem Schwefel In Pulverform versetzt und bei Raumtemperatur in einem verschließbaren Behälter mit 50 ml Wasser übergossen und vermischt. Anschließend wird der Behälter zwei Stunden lang geschlossen gehalten. Nach Abschluß der Aktivierung beträgt der Wassergehalt des Fichtenholzmehles 41 %. Danach wird dem aktivierten Fichtenholzmehl 50,2 ml 85%ige Phosphorsäure (8,26 Mol/kg Holz) langsam zugetropft und während einer Zeitdauer von 30 min mit dem Holzmehl gemischt. Nach diesem Mischvorgang wird dem Gemisch 148,2 g prillierter Harnstoff (3,35 Mol/Mol Phosphorsäure) zugesetzt und weitere 30 min lang gemischt. Danach wird das feuchte, rieselfähige Gemisch in einen Labor-Rotationsverdampfer (2I-Kolben) gegeben, ein Vakuum von 4,00 kPa angelegt und mittels eines Ölbades unter ständigem Rühren auf eine Temperatur von 90 °C erhitzt, solange bis kein Wasser mehr abdestilliert. Unter Aufrechterhaltung des angelegten Vakuums und weiterem Rühren wird das wasserfreie Gemisch auf eine Reaktionstemperatur von 135 °C erhitzt und diese Temperatur während des Mischprozesses beibehalten. Die einsetzende Gasentwicklung klang nach 1 1/2 Stunden ab und der Reaktionsprozeß wurde beendet. Das Rohprodukt wurde anschließend abgekühlt.

Beispiele 2 bis 11

Es wurde ausgehend von verschiedenen cellulosehaltigen Materialien analog wie im Beispiel 1 verfahren, wobei jedoch die Ausgangskomponenten und die Verfahrensparameter wie folgt verändert wurden.

a)      Ausgangskomponenten

| Bsp. | celluloseh. Ausgangsmat. | Wassergehalt (%) | H₃PO₄ (85 %ig) (ml) | Molzahl[1] | Harnstoff (g) | Molverh. [2] |
|------|------|------|------|------|------|------|
| 1 | F3 | 11 | 50,2 | 8,26 | 148,2 | 3,35 |
| 2 | F1 | 28 | 58,5 | 11,9 | 154,2 | 3,0 |
| 3 | F2 | 28 | 25,0 | 5,1 | 99,1 | 4,5 |
| 4 | F3 | 11 | 51,6 | 8,5 | 149,8 | 3,3 |
| 5 | F3 | 11 | 50,2 | 8,26 | 110,3 | 2,0 |
| 6 | F3 | 11 | 50,2 | 8,26 | 132,3 | 3,0 |
| 7 | F3 | 11 | 50,2 | 8,26 | 176,4 | 4,0 |
| 8 | P3 | 22 | 63,9 | 12,0 | 196,6 | 3,5 |
| 9 | B4 | 10 | 55,3 | 9,0 | 194,4 | 4,0 |
| 10 | R5 | 12 | 36,0 | 6,0 | 110,9 | 3,5 |
| 11 | G2 | 14 | 35,2 | 6,0 | 77,4 | 2,0 |

cellulosehaltiges Ausgangsmaterial:

Körnung in mm:

F = Fichtenholz           1 = 1,0 - 2,0

P = Pappelholz            2 = 0,2 - 1,0

B = Buchenholz            3 = 0,4 - 1,25

R = Rübenschnitzel        4 = 0,2 - 0,8

G = Gerstenstroh          5 = 0,2 - 2,0

[1]      Mol H₃PO₄ je kg cellulosehaltigem Material

[2]      Mol Harnstoff je Mol H₃PO₄

b)      Verfahrensparameter

| Beispiel | Aktivierung | | | Trocknung | | Reaktion | | |
|------|------|------|------|------|------|------|------|------|
| | Zugabe H₂O (ml) | Zeitdauer (h) | Wasser- gehalt (%) | Temp. (°C) | Vakuum (kPa) | Temp. (°C) | Vakuum (kPa) | Zeitdauer (h) |
| 1 | 50,0 | 2 | 41 | 90 | 4,00 | 135 | 4,00 | 1,5 |
| 2 | 75,6 | 1 | 59 | 70 | 6,67 | 125 | 6,67 | 1,0 |

# EP 1 036 109 B1

(fortgesetzt)

| Beispiel | Aktivierung | | | Trocknung | | Reaktion | | |
|---|---|---|---|---|---|---|---|---|
| | Zugabe $H_2O$ (ml) | Zeitdauer (h) | Wasser- gehalt (%) | Temp. (°C) | Vakuum (kPa) | Temp. (°C) | Vakuum (kPa) | Zeitdauer (h) |
| 3 | 5,9 | 3 | 32 | 80 | 26,66 | 140 | 26,66 | 4,0 |
| 4 | 74,5 | 2 | 49 | 90 | 13,33 | 140 | 13,33 | 2,1 |
| 5 | 50,9 | 2 | 41 | 70 | 5,33 | 130 | 5,33 | 1,1 |
| 6 | 50,9 | 2 | 41 | 80 | 3,33 | 130 | 3,33 | 1,9 |
| 7 | 50,9 | 2 | 41 | 90 | 20,00 | 140 | 20,00 | 3,3 |
| 8 | 32,2 | 3 | 41 | 90 | 4,00 | 125 | 4,00 | 4,0 |
| 9 | 38,5 | 3 | 35 | 90 | 4,67 | 125 | 4,67 | 3,1 |
| 10 | 120,0 | 1 | 60 | 80 | 9,33 | 135 | 9,33 | 2,6 |
| 11 | 24,6 | 1 | 31 | 90 | 14,66 | 140 | 14,66 | 1,1 |

Vergleichsbeispiel 1

Es wird analog wie im Beispiel 1 verfahren, lediglich ohne Zugabe von Schwefel und mit einer Änderung der zugesetzten Mengen an Phosphorsäure und Harnstoff. Im Vergleich zum Beispiel 1 wurden die 2,5 fache Menge an Phosphorsäure, 125 ml (entspricht 20,65 Mol $H_3PO_4$ je kg Trockenmasse des Fichtenholzes) und die 2,5 fache Menge an Harnstoff, 370,5 g (entspricht 8,375 Mol/ Mol $H_3PO_4$) zugesetzt.

Vergleichsbeispiel 2

Es wurde analog Beispiel 3 verfahren, lediglich mit einer Änderung der zugesetzten Menge an Phosphorsäure. Diese betrug 19,6 ml (entspricht 4,0 Mol $H_3PO_4$ je kg Trockenmasse Fichtenholz).

Vergleichsbeispiel 3

Es wurde analog Beispiel 5 verfahren, lediglich mit einer Änderung der zugesetzten Menge an Harnstoff. Diese betrug 66,2 g, was einem Molverhältnis Harnstoff zu Phosphorsäure von 1,5 : 1 entspricht.
Die gemäß den Beispielen 1 bis 11 und den Vergleichsbeispielen 1 bis 3 hergestellten Biosorbentien wurden in folgender Ausbeute und Trockengehalt mit jeweiligen Gehalten an P und N erhalten:

C    Eigenschaften der Endprodukte

| Beispiel | Ausbeute (g) | Trockengehalt (%) | Gehalt | |
|---|---|---|---|---|
| | | | P (%) | N (%) |
| | | | | |
| 1 | 423,6 | 33,4 | 7,7 | 1,3 |
| 2 | 327,0 | 38,2 | 10,0 | 1,0 |
| 3 | 363,6 | 29,7 | 6,0 | 4,0 |
| 4 | 435,5 | 32,1 | 7,8 | 2,1 |
| 5 | 416,8 | 34,0 | 7,9 | 1,1 |
| 6 | 420,8 | 31,3 | 5,0 | 1,9 |

(fortgesetzt)

| Beispiel | Ausbeute (g) | Trockengehalt (%) | Gehalt | |
|---|---|---|---|---|
| | | | P (%) | N (%) |
| 7 | 359,0 | 40,2 | 9,1 | 3,3 |
| 8 | 341,9 | 38,7 | 9,9 | 4,0 |
| 9 | 351,8 | 41,3 | 8,2 | 3,1 |
| 10 | 671,1 | 9,7 | 6,8 | 2,6 |
| 11 | 548,0 | 12,7 | 5,0 | 1,1 |
| Vergleichsbeispiel | | | | |
| 1 | 401,7 | 40,4 | 14,2 | 0,1 |
| 2 | 363,5 | 28,8 | 4,1 | 4,2 |
| 3 | 389,4 | 35,5 | 7,0 | 0,4 |

Die gemäß den Beispielen 1 bis 11 und den Vergleichsbeispielen 1 bis 3 hergestellten Biosorbentien wurden nachfolgend auf ihre Sorptionseigenschaften untersucht.

Die Bestimmung der Sorptionsgleichgewichtsdaten erfolgte nach folgender Methode: 250 ml Maßkolben wurden mit den feuchten Sorbensproben (0,1 bis 0,025 g Trockensubstanz) und jeweils 1 bis 5 ml m/10 Lösungen von Salzen der Metalle Cu, Cd oder Pb beschickt, aufgefüllt, mit Magnetrührstab versehen und 3 Stunden bei Zimmertemperatur gerührt. Nach dem Absitzen wurden die Lösungen dekantiert, ihr pH bestimmt und komplexometrisch ihr Metallgehalt ermittelt. Aus den so erhaltenen Gleichgewichtskonzentrationen in der Lösung und der durch die Zugabe von Metallsalzlösungen festgelegten Ausgangskonzentrationen wurden die Gleichgewichtskonzentrationen am Sorbens errechnet. Durch Zugabe entsprechender Mengen Salpetersäure vor dem Auffüllen der Maßkolben wurde pH = 3 bei der Sorption eingestellt. Mehrere Kontrollmessungen der Gleichgewichtskonzentrationen In der Lösung mittels Atomabsorptionsspektroskopie (AAS) ergaben Abweichungen im Bereich der Meßgenauigkeit und bestätigten so die Verläßlichkeit komplexometrischer Analysen bei den Sorptionsuntersuchungen.

Die für die einzelnen Sorbentien ermittelten Sorptions-Kapazitäten sind in der nachfolgenden Tabelle angegeben.

Die Festigkeit der Sorption wurde an Hand der Gleichgewichtsdaten bei niedrigen Gleichgewichtskonzentrationen (unter 10 mg/l) in der Lösung bestimmt (ebenfalls bei Zimmertemperatur und pH 3). Zur besseren Übersichtlichkeit der Daten wurde der an sich übliche metallspezifische Gleichgewichtskoeffizient $K_{Me}$ nach der Formel

$$K_{Me} = C_s/C_1$$

berechnet.

Dabei ist $C_s$ die Gleichgewichtsmetallkonzentration im Sorbens in mg/g und $C_1$ die Gleichgewichtskonzentration an Metall in der Lösung in mg/l.

Die errechneten Ergebnisse sind ebenfalls in der nachfolgenden Tabelle angegeben.

| Beispiel | Kapazität (meq/g) | Festigkeit als $K_{Me}$ (l/g) | | |
|---|---|---|---|---|
| | | $K_{Cu}$ | $K_{Cd}$ | $K_{Pb}$ |
| | | | | |
| 1 | 5,3 | 38,6 | 126,2 | 62,6 |
| 2 | 5,6 | 32,1 | 90,6 | 40,9 |
| 3 | 4,7 | 41,8 | 133,7 | 69,8 |
| 4 | 5,1 | 40,1 | 120,4 | 63,3 |
| 5 | 4,9 | 35,3 | 122,8 | 61,9 |

(fortgesetzt)

| Beispiel | Kapazität (meq/g) | Festigkeit als $K_{Me}$ (l/g) | | |
|---|---|---|---|---|
| | | $K_{Cu}$ | $K_{Cd}$ | $K_{Pb}$ |
| 6 | 5,0 | 31,2 | 118,1 | 58,4 |
| 7 | 5,1 | 45,1 | 139,3 | 71,3 |
| 8 | 5,5 | 43,0 | 140,9 | 59,6 |
| 9 | 5,1 | 37,5 | 125,4 | 65,2 |
| 10 | 4,5 | 20,7 | 80,9 | 39,2 |
| 11 | 4,6 | 18,9 | 76,0 | 39,1 |
| V1 | 5,1 | 2,5 | 6,2 | 10,3 |
| V2 | 3,6 | 11,2 | 24,6 | 19,9 |
| V3 | 3,9 | 5,2 | 25,7 | 19,3 |

Die Sorptionsergebnisse zeigen, daß im Vergleich zu den bisher üblichen Einsatzmengen bei einem um ca. 50 % geringeren Einsatz an Phosphorsäure und Harnstoff eine Ionenaustauschkapazität von 4,5 bis 5,6 meq/g erreicht werden konnte. Die unteren Werte wurden bei Sorbentien auf der Basis von Rübenschnitzel bzw. Gerstenstroh ermittelt, die ausgehend von ihrer Materialstruktur geringere Kapazitäten aufweisen.

Hinsichtlich der berechneten Gleichgewichtskoeffizienten $K_{ME}$ für die Metalle Cu, Cd oder Pb wurden gemäß den erfindungsgemäßen Beispielen sehr gute Ergebnisse erzielt, die erheblich besser sind als die Festigkeitswerte der bekannten Sorbentien. Die Vergleichsbeispiele belegen, daß bei Einsatzmengen der Reaktionspartner Phosphorsäure und Harnstoff, die außerhalb der erfindungsgemäßen liegen, wesentlich schlechtere Sorptionseigenschaften, vor allem hinsichtlich der Festigkeit erzielt werden.

**Patentansprüche**

1. Verfahren zur Herstellung von Biosorbentien durch Phosphorylierung cellulosehaltiger Materialien mit Phosphorsäure oder Ammoniumphosphat in Gegenwart von Harnstoff, wobei das Reaktionsgemisch auf die erforderliche Reaktionstemperatur erwärmt und nach Beendigung der Reaktionsdauer auf Normaltemperatur abgekühlt wird und die Verunreinigungen ausgewaschen werden, **dadurch gekennzeichnet, daß** die Phosphorylierung nach folgenden Verfahrensschritten durchgeführt wird:

   a) Aktivierung des cellulosehaltigen Materials, indem dieses auf einen Feuchtigkeitsgehalt von 30 bis 60 % eingestellt wird und dieser während einer Zeitdauer von mindestens einer Stunde aufrechterhalten wird,

   b) Zugabe des Phosphorylierungsmittels in einer Menge von 6 bis 12 Mol je kg wasserfreiem cellulosehaltigem Material,

   c) Zugabe von Harnstoff in einem Molverhältnis zum Phosphorphorylierungsmittel von 2,5:1 bis 4,5:1,

   d) Vermischen der Komponenten Harnstoff und Phosphorphorylierungsmittel mit dem aktivierten cellulosehaltigen Material, solange bis die Komponenten gleichmäßig verteilt sind,

   e) Verdampfen der in dem gemäß den Verfahrensschritten a) bis d) gebildeten Gemisch enthaltenen Feuchtigkeit durch Erhitzen des Gemisches auf eine Temperatur von 60 bis 100 °C bei gleichzeitigem Anlegen eines Vakuums,

   f) Durchführung einer Phosphorylierung und Carbamidierung durch Erhitzen des Gemisches auf eine Temperatur von 125 bis 145 °C bei gleichzeitigem Anlegen eines Vakuums unter Einhaltung einer Reaktionszeit von ein bis vier Stunden und

   g) Abkühlung des Reaktionsproduktes auf Normaltemperatur und Auswaschen der Verunreinigungen.

**2.** Verfahren nach Anspruch 1, **dadurch gekennzeichnet, daß** zur Aktivierung des cellulosehaltigen Materials diesem eine vorbestimmte Menge an Wasser zugesetzt wird.

**3.** Verfahren nach einem der Ansprüche 1 oder 2, **dadurch gekennzeichnet, daß** dem aktivierten cellulosehaltigen Material zuerst das Phosphorylierungsmittel zugesetzt und gleichmäßig verteilt wird und anschließend der Harnstoff.

**4.** Verfahren nach einem der Ansprüche 1 bis 3, **dadurch gekennzeichnet, daß** die Mischzeiten zum Einmischen des Phosphorylierungsmittels und des Harnstoffes jeweils mindestens 15 min betragen.

**5.** Verfahren nach einem der Ansprüche 1 bis 4, **dadurch gekennzeichnet, daß** die Reaktionskomponenten Phosphorylierungsmittel und Harnstoff bei Raumtemperatur mit dem cellulosehaltigen Material vermischt werden.

**6.** Verfahren nach einem der Ansprüche 1 bis 5, **dadurch gekennzeichnet, daß** das Phosphorylierungsmittel und/oder der Harnstoff mit der zur Aktivierung bestimmten Wassermenge vermischt werden und die so erhaltene Lösung zur Aktivierung mit dem cellulosehaltigen Material vermischt wird.

**7.** Verfahren nach Anspruch 6, **dadurch gekennzeichnet, daß** das Vermischen des Phosphorylierungsmittels und/oder des Harnstoffes mit dem Wasser unter Erwärmen auf Temperaturen bis zu 60 °C durchgeführt wird.

**8.** Verfahren nach einem der Ansprüche 6 oder 7, **dadurch gekennzeichnet, daß** das cellulosehaltige Material vor der Aktivierung auf die Temperatur der Lösung von Harnstoff und/oder Phosphorylierungsmittel In Wasser erwärmt wird.

**9.** Verfahren nach einem der Ansprüche 1 bis 8, **dadurch gekennzeichnet, daß** das angelegte Vakuum auf einen Wert von 6,67 kPa bis 26,66 kPa eingestellt wird.

**10.** Verfahren nach einem der Ansprüche 1 bis 9, **dadurch gekennzeichnet, daß** das cellulosehaltige Material vor dem Aktivieren auf eine Korngröße von 0,2 bis 4,0 mm zerkleinert wird.

**11.** Verfahren nach einem der Ansprüche 1 bis 10, **dadurch gekennzeichnet, daß** vor Reaktionsbeginn der Reaktionsmischung oder einer der Reaktionskomponenten elementarer Schwefel zugesetzt wird.

**12.** Biosorbentien zur Entfernung von Schwermetallen aus wäßrigen Lösungen, bestehend aus mit Phosphorsäure oder Ammoniumphosphat sowie Harnstoff phosphorylierten cellulosehaltigen Materialien, **dadurch gekennzeichnet, daß** der Phosphorgehalt 5 bis 10 % und der Stickstoffgehalt 1 bis 4 % betragen und der Stickstoff In Form von Carbamidgruppen vorliegt.

**Claims**

**1.** Process for producing biosorbents, by phosphorylation of celluslose-containing materials with phosphoric acid or ammonium phosphate in the presence of urea, where the reaction mixture is heated to the necessary reaction temperature and, after completion of the reaction time, cooled to normal temperature, and the impurities are washed out, **characterized in that** the phosphorylation Is carried out by the following process steps:

a) activation of the cellulose-containing material by adjusting it to a moisture content of from 30 to 60%, and maintaining this for a period of at least one hour,

b) addition of the phosphorylating agent in an amount of from 6 to 12 mol per kg of anhydrous cellulose-containing material,

c) addition of urea in a molar ratio to the phosphorphorylating agent of from 2,5:1 to 4,5:1,

d) mixing the components urea and phosphorphorylating agent with the activated cellulose-containing material until the components are uniformly distributed,

e) evaporation of the moisture present in the mixture formed in process steps a) to d) by heating the mixture to a temperature of from 60 to 100°C while simultaneously applying a vacuum,

f) carrying out a phosphorylation and carbamidation by heating the mixture to a temperature of from 125 to 145°C while simultaneously applying a vacuum and complying with a reaction time of from one to four hours and

g) cooling the reaction product to normal temperature and washing out the impurities.

2. Process according to claim 1, **characterized in that** a predetermined amount of water is added to the cellulose-containing material for the activation.

3. Process according to any of claims 1 or 2, **characterized in that** first the phosphorylating agent is added to the activated cellulose-containing material and is uniformly distributed, and then the urea.

4. Process according to any of claims 1 to 3, **characterized in that** the mixing times for mixing in the phosphorylating agent and the urea are at least 15 min in each case.

5. Process according to any of claims 1 to 4, **characterized in that** the reaction components phosphorylating agent and urea are mixed with the cellulose-containing material at room temperature.

6. Process according to any of claims 1 to 5, **characterized in that** the phosphorylating agent and/or the urea are mixed with the amount of water intended for the activation, and the solution obtained in this way is mixed with the cellulose-containing material for the activation.

7. Process according to claim 6, **characterized in that** the mixing of the phosphorylating agent and/or the urea with the water is carried out with heating to temperatures of up to 60°C.

8. Process according to either of claims 6 or 7, **characterized in that** the cellulose-containing material is heated, before the activation, to the temperature of the solution of urea and/or phosphorylating agent in water.

9. Process according to any of claims 1 to 8, **characterized in that** the applied vacuum is set at a value of from 6.67 kPa to 26.66 kPa.

10. Process according to any of claims 1 to 9, **characterized in that** the cellulose-containing material is comminuted to a particle size of from 0,2 to 4,0 mm before the activation.

11. Process according to any of claims 1 to 10, **characterized in that** elemental sulfur is added to the reaction mixture or to one of the reaction components before the start of the reaction.

12. Biosorbents for removing heavy metals from aqueous solutions, consisting of cellulose-containing materials phosphorylated with phosphoric acid or ammonium phosphate and urea, **characterized in that** the phosphorus content is from 5 to 10% and the nitrogen content is from 1 to 4%, and the nitrogen is present in the form of carbamide groups.

**Revendications**

1. Procédé de préparation d'agents de biosorption par phosphorylation de matières cellulosiques avec de l'acide phosphorique ou du phosphate d'ammonium en présence d'urée, le mélange réactionnel étant chauffé à la température de réaction nécessaire et refroidi jusqu'à la température normale à la fin de la période de réaction, et les contaminants étant éliminés par lavage, **caractérisé en ce que** la phosphorylation est réalisée conformément aux étapes de procédé suivantes :

a) l'activation de la matière cellulosique en ajustant sa teneur en humidité à 30-60 % et en la maintenant pendant une période d'au moins une heure,

b) l'addition de l'agent de phosphorylation en une quantité de 6 à 12 mol par kg de matière cellulosique exempte d'eau,

c) l'addition d'urée en un rapport molaire à l'agent de phosphorylation de 2,5:1 à 4,5:1,

d) le mélange des composants urée et agent de phosphorylation avec la matière cellulosique activée jusqu'à ce que les composants soient répartis uniformément,

e) l'évaporation de l'humidité contenue dans le mélange formé conformément aux étapes de procédé a) à d) en chauffant le mélange à une température de 60 à 100°C avec mise sous vide simultanée,

f) la réalisation d'une phosphorylation et d'une carbamidation en chauffant le mélange à une température de 125 à 145°C avec mise sous vide simultanée et en observant un temps de réaction d'une à quatre heures et

g) le refroidissement du produit de réaction jusqu'à la température normale et l'élimination des contaminants par lavage.

**2.** Procédé selon la revendication 1, **caractérisé en ce qu'**une quantité prédéterminée d'eau est ajoutée à la matière cellulosique en vue de son activation.

**3.** Procédé selon l'une quelconque des revendications 1 ou 2, **caractérisé en ce que** l'agent de phosphorylation est d'abord ajouté à la matière cellulosique activée et réparti uniformément et l'urée est ensuite ajoutée.

**4.** Procédé selon l'une quelconque des revendications 1 à 3, **caractérisé en ce que** les temps de mélange en vue de l'incorporation de l'agent de phosphorylation et de l'urée sont dans chaque cas d'au moins 15 minutes.

**5.** Procédé selon l'une quelconque des revendications 1 à 4, **caractérisé en ce que** les composants de réaction agent de phosphorylation et urée sont mélangés avec la matière cellulosique à la température ambiante.

**6.** Procédé selon l'une quelconque des revendications 1 à 5, **caractérisé en ce que** l'agent de phosphorylation et/ ou l'urée sont mélangés avec la quantité d'eau déterminée destinée à l'activation et la solution ainsi obtenue est mélangée avec la matière cellulosique en vue de l'activation.

**7.** Procédé selon la revendication 6, **caractérisé en ce que** le mélange de l'agent de phosphorylation et/ou de l'urée avec l'eau est réalisé en chauffant à des températures allant jusqu'à 60°C.

**8.** Procédé selon l'une quelconque des revendications 6 ou 7, **caractérisé en ce que** la matière cellulosique est chauffée avant l'activation à la température de la solution d'urée et/ou d'agent de phosphorylation dans l'eau.

**9.** Procédé selon l'une quelconque des revendications 1 à 8, **caractérisé en ce que** le vide établi est ajusté à une valeur de 6,67 kPa à 26,66 kPa.

**10.** Procédé selon l'une quelconque des revendications 1 à 9, **caractérisé en ce que** la matière cellulosique est fractionnée avant l'activation à une taille de particules de 0,2 à 4,0 mm.

**11.** Procédé selon l'une quelconque des revendications 1 à 10, **caractérisé en ce que**, avant le début de la réaction, du soufre élémentaire est ajouté au mélange réactionnel ou à l'un des composants de réaction.

**12.** Agents de biosorption destinés à éliminer les métaux lourds de solutions aqueuses, constitués de matières cellulosiques phosphorylées avec de l'acide phosphorique ou du phosphate d'ammonium ainsi que de l'urée, **caractérisés en ce que** la teneur en phosphore est de 5 à 10 % et la teneur en azote est de 1 à 4 %, et l'azote est présent sous forme de groupes carbamide.